Europäisches Patentamt

European Patent Office

Office européen des brevets

(11) Numéro de publication: **0 069 073**
A1

## (12) DEMANDE DE BREVET EUROPEEN

(21) Numéro de dépôt: **82810265.7**

(22) Date de dépôt: **15.06.82**

(51) Int. Cl.³: **G 01 L 1/04**, G 01 L 9/00

(30) Priorité: **01.07.81 CH 4340/81**
**06.07.81 FR 8113378**

(43) Date de publication de la demande: **05.01.83**
**Bulletin 83/1**

(84) Etats contractants désignés: **CH DE GB IT LI SE**

(71) Demandeur: **MICROBO S.A., Passage Max. Meuron 6/8,
CH-2001 Neuchatel (CH)**

(72) Inventeur: **Burckhardt, Christof W., Av. du Château 20,
CH-1020 Renens (CH)**
Inventeur: **Piller, Gérard, Chemin des Fleurs 6,
CH-1023 Crissier (CH)**

(74) Mandataire: **Gresset, Jean et al, ASUAG Département
Brevets et Licences Faubourg du Lac 6, CH-2501 Bienne
(CH)**

(54) **Dispositif de mesure de force.**

(57) L'invention concerne un dispositif de mesure de force, comprenant deux éléments rigides (1, 2) reliés entre eux par des moyens élastiques tels que des ressorts.

Ce dispositif de mesure de force comprend des moyens pour mesurer le déplacement suivant un à six degrés de liberté, d'un élément (2) par rapport à l'autre (1), ces moyens de mesure étant constitués par des capteurs (4) qui ne sont chacun sensibles qu'à la composante du déplacement suivant un axe respectif (4a).

Selon un mode de réalisation préféré, les éléments rigides présentent chacun la forme d'un plateau (1, 2), les deux plateaux étant juxtaposés et parallèles entre eux, et les moyens de mesure comprennent six capteurs de déplacement linéaire du type inductif (4) dont les axes (4a) sont non parallèles entre eux et non parallèles aux plateaux (1, 2).

EP 0 069 073 A1

0069073

ESA 97 BE

9-A/IR/cb

DISPOSITIF DE MESURE DE FORCE

La présente invention concerne les dispositifs de mesure de force et, plus particulièrement, les dispositifs comprenant deux éléments rigides et reliés entre eux par des moyens élastiques de liaison, tels que des ressorts.

Par le terme "force", on entend aussi bien la force proprement dite que le moment, qui sont appliqués sur l'un des éléments du dispositif de mesure de force, l'autre élément étant maintenu fixe.

Le brevet des Etats Unis d'Amérique no 4,094,192 décrit un dispositif de mesure de force de ce type, dans lequel des jauges de contrainte sont fixées sur lesdits moyens élastiques de liaison. Dans ce dispositif connu, on mesure les déformations desdits moyens élastiques de liaison par les jauges de contrainte. De tels systèmes de mesure sont instables et fragiles, de sorte qu'ils nécessitent des réglages de zéro fréquents et même des ré-étalonnages.

Par ailleurs, on connait par le brevet français no 2,394,075 un dispositif de mesure de pression de gaz, comprenant une membrane dont une face est soumise à ladite pression. Cette membrane est solidaire d'une pièce en matériau magnétique doux court-circuitant les lignes de champ magnétique issues de la culasse d'un électro-aimant fixe. Ce document précise que le centrage de ladite pièce en matériau magnétique, par rapport à la culasse de l'électro-aimant, n'est pas critique pour un bon fonctionnement du dispositif de mesure; ce dispositif ne peut cependant pas être utilisé pour mesurer un moment de force ou plusieurs composantes d'une force proprement dite, qui serait appliquée sur la membrane. Or dans de nombreuses applications, notamment en robotique, on doit mesurer des moments de forces ainsi que des forces proprement dites n'ayant pas une direction constante.

Un objet de la présente invention consiste donc à proposer un dispositif de mesure de force capable de mesurer un moment de forces et/ou plusieurs composantes d'une force proprement dite, ce dispositif n'utilisant pas de jauge de contrainte.

A cet effet, le dispositif de mesure de force conforme à l'invention comprend des moyens pour mesurer le déplacement, suivant un à six degrés de liberté, d'un élément par rapport à l'autre, ces moyens de mesure étant distincts desdits moyens élastiques, et comprenant plusieurs capteurs ayant chacun deux parties dont l'une est solidaire d'un élément rigide et dont l'autre est solidaire de l'autre-élément rigide. Ces capteurs sont du type ne répondant, sensiblement, qu'aux déplacements relatifs suivant une direction privilégiée, de leurs deux parties. Les capteurs sont de préférence disposés de telle sorte que lesdites directions privilégiées ne soient pas parallèles entre elles.

Grâce à l'invention, les moyens élastiques de liaison sont libérés de leur rôle de support de jauge de contrainte, de sorte qu'il est possible de leur donner n'importe quelle forme ou dimensions et, notamment des très petites ou très grandes dimensions.

Une solution simple et avantageuse selon la présente invention consiste à utiliser des capteurs de déplacement linéaire du type inductif ayant un noyau ferromagnétique, un enroulement primaire et au moins un enroulement secondaire coaxiaux entre eux.

Selon un mode de réalisation actuellement préféré, les éléments rigides présentent chacun la forme d'un plateau, les deux plateaux étant juxtaposés et parallèles entre eux, et les moyens de mesure comprennent six capteurs de déplacement linéaire du type inductif dont les axes sont non-parallèles entre eux, non-parallèles aux plateaux et sont disposés symétriquement par rapport à un axe orthogonal auxdits plateaux.

Les caractéristiques et avantages de l'invention seront mieux compris à la lecture de la description qui va suivre de plusieurs modes de réalisation de l'invention, description faite en référence aux dessins annexés dans lesquels :

- La figure 1 est une vue schématique en élévation et en coupe verticale à travers un dispositif de mesure d'une seule composante de la force, illustrant un premier exemple de capteur utilisable dans un dispositif selon l'invention;

- La figure 2 est une vue schématique en élévation et en coupe verticale à travers un dispositif de mesure d'une seule composante de la force, illustrant un deuxième exemple de capteur utilisable dans un dispositif selon l'invention;

- La figure 3 est une vue schématique en élévation et en coupe verticale à travers un dispositif de mesure d'une seule composante de la force, illustrant un troisième exemple de capteur utilisable dans un dispositif selon l'invention;

- La figure 4 est une vue en plan à partir du plan IV-IV de la figure 6, d'un dispositif de mesure des six composantes de la force, selon un mode de réalisation préféré de l'invention;

- La figure 5 est une coupe verticale selon le plan V-V de la figure 4;

- La figure 6 est une vue en coupe suivant le plan VI-VI de la figure 4;

- La figure 7 est un schéma synoptique d'un circuit électronique utilisé dans le dispositif des figures 4 à 6; et

- La figure 8 est un schéma géométrique montrant le déplacement en un point $O'_k$, sous l'effet d'une force, d'un plateau d'un dispositif de mesure de force, par rapport à l'autre plateau de ce dispositif.

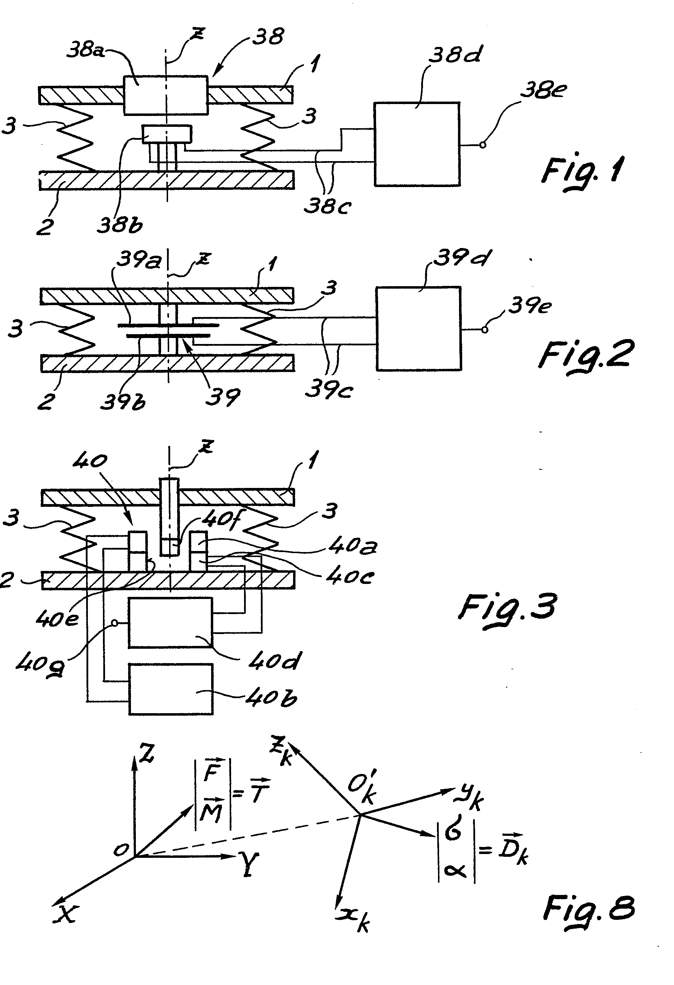

Les dispositifs représentés sur les figures 1 à 3 comprennent :

- un premier plateau rigide de forme circulaire 1,

- un deuxième plateau rigide de forme circulaire 2 disposé sous le premier plateau 1 coaxialement à ce dernier, et

- des pièces de liaison élastiques constituées, dans l'exemple représenté, par des ressorts hélicoïdaux 3 fixés, d'une part, au plateau 1 et, d'autre part, au plateau 2.

Les dispositifs représentés sur les figures 1 à 3 comportent en outre un capteur de déplacement 38,39,40 du type répondant à un déplacement du plateau 2 par rapport au plateau 1 en mesurant la composante verticale, c'est-à-dire la composante suivant l'axe commun Z desdits plateaux 1 et 2, de ce déplacement.

Le dispositif selon la figure 1 comporte un capteur de déplacement 38 comprenant, d'une part, un générateur de champ magnétique tel qu'un aimant permanent 38a, fournissant un champ homogène sur une zone substantielle d'un plan transversal à l'axe Z, et, d'autre part, un élément sensible au champ magnétique 38b disposé de manière à être soumis au champ magnétique engendré par le générateur 38a; ladite zone de champ homogène s'étend suffisamment pour couvrir toute l'étendue de déplacements possible de l'élément sensible 38b par rapport au générateur 38a. Le générateur 38a est fixé au plateau 1 tandis que l'élément 38b est fixé au plateau 2, à proximité du générateur de champ magnétique 38a. L'élément sensible 38b est, par exemple, une magnétorésistance dont les bornes sont reliées, par des conducteurs 38c, à un pont de mesure 38d connu en soi, délivrant sur sa sortie 38e un signal ayant pour valeur $\Delta R/R$, R étant la valeur de repos, c'est-à-dire la valeur en l'absence de force appliquée sur le plateau 2, de la résistance électrique de l'élément 38b, $\Delta R$ étant la variation de cette résistance R à partir de ladite valeur de repos.

Alternativement, l'élément 38b peut être un élément à effet Hall fournissant un signal qui est amplifié et soustrait d'un signal de référence fixe, dans un circuit 38d.

Le champ magnétique engendré par le générateur 38a décroît fortement lorsqu'on s'éloigne de ce dernier, c'est-à-dire lorsqu'on se déplace parallèlement à l'axe Z. En revanche, la valeur de ce champ magnétique est à peu près uniforme en tous points d'une portion de plan transversal à l'axe Z.

On comprend ainsi que le capteur 38 est relativement insensible aux déplacements relatifs du plateau 2 par rapport au plateau 1 dans le sens transversal à l'axe Z ainsi qu'aux déplacements angulaires relatifs desdits plateaux, de sorte que le signal délivré sur la sortie 38e est une mesure de la composante suivant l'axe Z du déplacement de ce plateau 2 par rapport au plateau 1.

Le capteur de déplacement 39 du dispositif de mesure selon la figure 2, comporte un condensateur ayant une armature 39a solidaire du plateau 1 et une seconde armature 39b solidaire du plateau 2. Les armatures 39a, 39b s'étendent parallèlement aux plateaux 1 et 2, et elles sont reliées, par des conducteurs 39c, à un pont de mesure connu en soi 39d délivrant sur sa sortie 39e un signal ayant pour valeur $\Delta C/C$, C étant la valeur de repos de la capacité du condensateur 39a, 39b et $\Delta C$ la variation de cette capacité à partir de ladite valeur de repos. Comme dans le cas précédent, le capteur 39 est relativement insensible aux déplacements relatifs du plateau 2, par rapport au plateau 1, dans le sens transversal à l'axe Z, ainsi qu'aux déplacements angulaires relatifs desdits plateaux.

Le capteur de mesure 40 du dispositif selon la figure 3 comprend (a) une bobine primaire 40a alimentée par un signal électrique alternatif fourni par un oscillateur 40b, et (b) une bobine secondaire 40c dont les bornes sont reliées à un circuit amplificateur-démodulateur 40d. Les bobines 40a et 40b ont pour axe l'axe Z, elles sont fixées au plateau 2 et elles reçoivent avec jeu, dans leur évidement 40e, un noyau ferromagnétique 40f fixé au plateau 1.

Le capteur 40 réagit aux déplacements du noyau 40f par rapport aux bobines 40a, 40c en fournissant, sur la sortie 40g du circuit 40d, un signal ayant pour valeur la composante suivant l'axe Z du déplacement dudit noyau 40f par rapport auxdites bobines 40a, 40c. On constate en effet qu'un déplacement du noyau 40f dans le sens transversal à l'axe Z des bobines 40a, 40c se traduit par une variation du signal présent sur la borne de sortie 40g, très faible par rapport à celle qui résulterait d'un déplacement de ce noyau parallèlement à l'axe Z des bobines 40a, 40c.

Selon un autre mode de réalisation non représenté, le capteur de déplacement est du type de ceux qui sont décrits dans les brevets américains no 4001718 et 4068189 et commercialisés par la firme ELECTRO CORPORATION (SARASOTA, Etats-Unis).

Les dispositifs qui viennent d'être décrits trouvent application dans tous les cas où l'on n'a besoin de connaître que la composante suivant l'axe Z de la force appliquée sur le plateau 1.

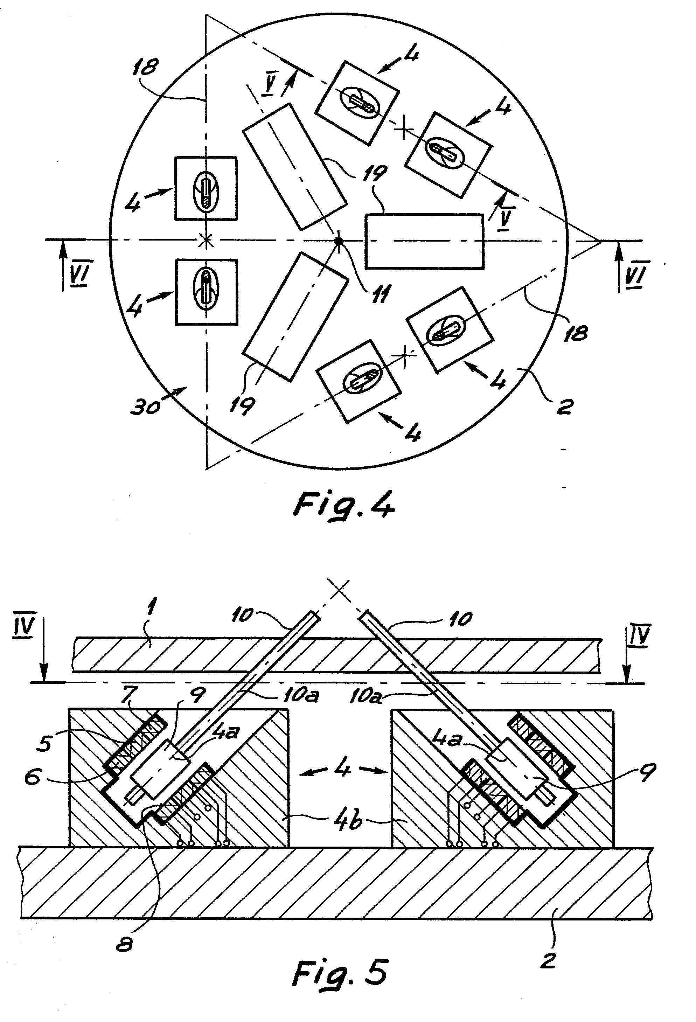

Dans les cas où l'on doit connaître les six composantes de la force appliquée sur le plateau 2, il est nécessaire de disposer d'un ensemble d'au moins six capteurs parmi lesquels il est nécessaire qu'il n'y ait pas plus de trois capteurs d'axes parallèles entre eux ni plus de trois capteurs d'axes coplanaires. Le capteur de force représenté sur les figures 4 à 7 constitue un mode de réalisation préféré d'un dispositif comportant six capteurs de déplacement.

Selon ce mode de réalisation, le dispositif de mesure de force comprend six capteurs inductifs de déplacement linéaire 4 analogues au capteur désigné par la référence 40 sur la figure 3. Ces capteurs 4 ont des axes 4a non parallèles aux plateaux 1 et 2 et ayant chacun une direction propre; les capteurs 4 sont groupés par paires, les capteurs de chaque paire ayant des axes coplanaires et divergeant l'un de l'autre à partir du plateau 1 en direction du plateau 2. Comme on peut le voir sur la figure 5, l'axe 4a de chaque capteur 4 est incliné, par exemple, à 45° par rapport au plan des plateaux 1,2. De plus, comme on peut le voir sur la figure 4, les paires de capteurs 4 sont réparties de telle sorte que les plans communs 18, c'est-à-dire les plans contenant les axes 4a des capteurs 4 de chaque paire, constituent les faces latérales d'un prisme droit à sections en forme de triangle équilatéral, ce prisme ayant pour axe l'axe commun 11 des plateaux 1 et 2. En bref les axes 4a sont disposés symétriquement par rapport à l'axe 11 et ils sont régulièrement répartis autour de ce dernier.

Selon l'exemple représenté sur les figures 4 à 6, chaque capteur inductif 4 comprend :

- une bobine primaire 5 d'axe vertical alimentée en courant alternatif par des moyens non représentés, et deux bobines secondaires 6 et 7 coaxiales entre elles et avec ladite bobine primaire 5. Les bobines secondaires 6 et 7 sont disposées de part et d'autre de la bobine primaire 5. Les bobines 5,6 et 7 de chaque capteur 4 sont logées dans un support commun 4b fixé au plateau 2. Dans l'évidement axial 8 des bobines 5 à 7, est logé un noyau ferromagnétique 9 vissé sur une tige en matériau amagnétique 10, elle-même fixée au plateau 1. Les bornes des bobines 5 à 7 sont reliées à un circuit électronique connu en soi délivrant sur sa sortie un signal proportionnel à la composante suivant l'axe 4a du déplacement relatif du noyau 9 par rapport audites bobines 5 à 7.

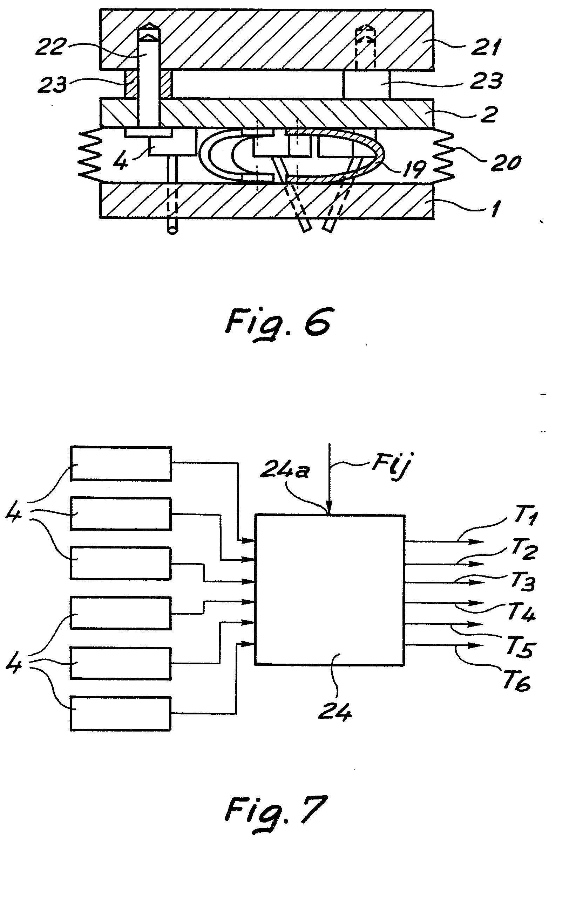

Comme le montrent conjointement les figures 4 et 6, les plateaux 1 et 2 sont reliés entre eux par des ressorts en U, 19. Comme le montre la figure 4, les ressorts 19 sont au nombre de trois et ils sont disposés en étoile à 120° l'un de l'autre autour de l'axe commun 11 des plateaux 1 et 2.

Comme on peut le voir sur la figure 6, une paroi en forme de soufflet 20 relie de façon étanche le bord périphérique du plateau 1 à celui du plateau 2 afin d'empêcher toute introduction de poussière ou autre impureté dans l'espace compris entre ces deux plateaux.

Par ailleurs, le plateau 2 est fixé sur un support, par l'intermédiaire de vis 22 munies de manchons formant entretoises 23.

Enfin des butées non représentées limitent l'amplitude du déplacement du plateau 2 par rapport au plateau 1.

Selon un mode de réalisation non représenté, on utilise, à la place de trois bobines 5 à 7, deux bobines coaxiales reliées électriquement en série de manière à constituer un pont d'inductances; au point milieu de ce pont on recueille un signal de tension ayant une amplitude qui varie proportionnellement aux déplacements du noyau 9.

Comme le montre la figure 7, les signaux fournis par les six capteurs 4 sont appliqués sur les entrées d'un calculateur analogique ou numérique 24 conçu pour fournir sur ses sorties les signaux de mesure de six composantes T1 à T6 définissant complètement la force généralisée appliquée sur le plateau 1.

Sur la figure 8, une force généralisée $\vec{T}$, appliquée en un point déterminé du plateau 1 et définie par ses six composantes dans un trièdre 0XYZ lié à ce plateau, se traduit par un déplacement généralisé $\vec{D}_k$ en un point $O'_k$ de ce même plateau 1, $\vec{D}_k$ étant repéré par ses composantes dans un trièdre $O'_k x_k y_k z_k$ dont les trois axes ont des directions liées au plateau 2. Il existe une relation matricielle entre $\vec{T}$ et $\vec{D}_k$ qui s'écrit :

$$\vec{D}_k = [F_k] \cdot \vec{T}$$

k étant l'indice du capteur inductif 4 placé en $O'_k$. La matrice $[F_k]$ est appelée flexibilité.

Dans la réalité, la matrice $[F_k]$ est le produit d'un certain nombre de matrices de rotation et de déplacement qui dépendent de la géométrie du dispositif de mesure de force.

De chaque vecteur $\vec{D}_k$ nous ne retenons que la composante $D_{ak}$ suivant l'axe du capteur inductif d'indice k, du déplacement en $0'_k$. On a alors la relation :

$$\begin{vmatrix} D_{a1} \\ D_{a2} \\ D_{a3} \\ D_{a4} \\ D_{a5} \\ D_{a6} \end{vmatrix} = [FF] \quad . \quad \vec{T}$$

l'indice 1 à 6 étant celui du capteur inductif et [PF] une matrice qu'on peut appeler "pseudo-flexibilité".

La matrice [PF] est déterminée par calibrage du dispositif. Ce calibrage consiste à appliquer au plateau 1 en un point d'application déterminé, des forces et des moments purs connus et à relever les valeurs des signaux électriques aux bornes de chaque capteur inductif 4. La matrice de calibrage est valable pour un point d'application donné.

Pour un usage ultérieur, on introduit dans le calculateur 24 par des entrées 24a les termes $PF_{ij}$ de la matrice [PF] obtenue. Le calculateur 24 est conçu pour calculer la matrice inverse $[PF]^{-1}$ telle que

$$\vec{T} = [PF]^{-1} \begin{vmatrix} D_{a1} \\ D_{a2} \\ D_{a3} \\ D_{a4} \\ D_{a5} \\ D_{a6} \end{vmatrix}$$

La force généralisée $\vec{T}$ peut alors être mesurée grâce aux signaux relevés sur les six capteurs inductifs 4, signaux qu'on peut considérer comme proportionnels aux déplacements axiaux $D_{a1}$ à $D_{a6}$.

Une inversion de matrice est une opération délicate qui peut introduire des erreurs importantes dans le résultat final. Pour éviter ces problèmes, il faut faire en sorte que les éléments de [PF] soient d'ordres de grandeur assez proches les uns des autres. Ceci est obtenu selon le mode de réalisation des figures 4 à 6 par la disposition symétrique et la répartition régulière des capteurs 4 – et donc de leur axe 4a – autour de l'axe 11.

On choisira par ailleurs avec soin la position et la raideur des ressorts par rapport au point d'application de la force.

Le dispositif représenté sur les figures 4 à 7 peut être utilisé dans l'application suivante : en attachant au plateau 1 une masse relativement importante, et en fixant le plateau 2 sur une structure de base, on peut réaliser un accéléromètre vectoriel.

Le dispositif des figures 4 à 7 peut également être utilisé pour mesurer les six composantes des efforts appliqués à un objet en cours d'essais en soufflerie. Dans ce cas, ledit objet est fixé sur le plateau 1 tandis que le plateau 2 est fixé sur une structure fixe.

0069073

## REVENDICATIONS

1. Dispositif de mesure de force, du type comportant un premier et un deuxième élément rigide (1,2), ces éléments étant juxtaposés et reliés entre eux par des moyens élastiques (3;19), caractérisé en ce qu'il comprend des moyens (4) distincts desdits moyens élastiques pour mesurer le déplacement, suivant au moins un degré de liberté, du deuxième élément rigide (2) par rapport à un repère lié au premier élément rigide (1), ces moyens de mesure comprenant plusieurs capteurs (4) ayant chacun deux parties (9 et 4b,5,6,7) dont l'une est solidaire du premier élément (1) et dont l'autre est solidaire du deuxième élément (2), ces capteurs ne répondant chacun, sensiblement, qu'aux déplacements relatifs suivant un axe déterminé respectif (4a) de leurs deux parties.

2. Dispositif selon la revendication 1, caractérisé en ce que les deux parties d'un capteur sont sans contact mécanique l'une avec l'autre.

3. Dispositif selon l'une des revendications 1 et 2, caractérisé en ce que lesdits axes (4a) sont non-parallèles entre eux.

4. Dispositif selon la revendication 1, caractérisé en ce que les premier et deuxième éléments rigides comprennent chacun un plateau (1,2), et en ce que lesdits plateaux sont parallèles entre eux, en position de repos du dispositif.

5. Dispositif selon la revendication 4, caractérisé en ce que les axes (4a) des capteurs de déplacement (4) sont non parallèles auxdits plateaux.

6. Dispositif selon l'une des revendications 1 à 5, caractérisé en ce que les moyens de mesure comprennent au moins un capteur de déplacement linéaire du type inductif ayant un noyau ferromagnétique (9), une bobine primaire (5) et au moins une bobine secondaire (6,7), lesdites bobines (5 à 7) étant coaxiales entre elles et
étant solidaires de l'un des éléments rigides (2), ledit noyau magnétique (9) étant solidaire de l'autre élément rigide (1) et étant
agencé pour influencer le couplage électromagnétique entre lesdites
bobines.

7. Dispositif selon l'une des revendications 1 à 6, caractérisé en
ce que les moyens de mesure comprennent au moins un capteur de
déplacement linéaire du type inductif ayant un noyau ferromagnétique et deux bobines coaxiales reliées électriquement en série de
manière à constituer un pont d'inductances, les bobines étant
solidaires de l'un des éléments rigides, ledit noyau ferromagnétique
étant solidaire de l'autre élément rigide et étant agencé pour influencer l'inductance desdites bobines.

8. Dispositif selon l'une des revendications 4 à 7, caractérisé en
ce que les axes (4a) desdits capteurs (4) sont disposés symétriquement par rapport à un axe (11) orthogonal aux plateaux (1,2).

0069073

1/3

Fig. 1

Fig.2

Fig.3

Fig.8

Fig.4

Fig. 5

Fig. 6

Fig. 7

Office européen
des brevets

**RAPPORT DE RECHERCHE EUROPEENNE**

0069073

Numéro de la demande

EP 82 81 0265

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | DE-A-2 211 359 (HONSBERG & CO. K.G.) *Page 5, ligne 15 - page 6, ligne 34; page 7, lignes 16-36; revendications 1,3,5,13,14,16; figures 1-4* | 1,2,4, 5 | G 01 L 1/04 G 01 L 9/00 |
| D,Y | FR-A-2 394 075 (ROBERT BOSCH GmbH) *Revendications 1-4; figures 1,2* | 1,2,4-7 | |
| A | FR-A-2 413 649 (NISSAN MOTOR COMP. LTD.) *Page 4, ligne 35 - page 5, ligne 12; revendications 1-4; figures 2,3* | 1,2,4-7 | |
| A | FR-A-2 447 021 (NAGANOKEIKI SEISAKUJO CO. LTD.) *Page 6, ligne 11 - page 7, ligne 6; revendication 1; figures 1,2,5* | 1,2,4-6 | **DOMAINES TECHNIQUES RECHERCHES (Int. Cl. ³)** G 01 L |
| A | US-A-3 190 123 (H.E.SCHMITT) *Figures 1,2; revendication* | 1,2,4-6 | |
| D,A | US-A-4 094 192 (P.C.WATSON et al.) *Résumé; revendications 1,5,6,7; figure 2* | 1,4 | |

Le présent rapport de recherche a été établi pour toutes les revendications

| Lieu de la recherche | Date d'achèvement de la recherche | Examinateur |
|---|---|---|
| LA HAYE | 30-08-1982 | VISENTIN A. |